# EUROPEAN PATENT APPLICATION

(11) **EP 4 424 444 A1**
(43) Date of publication of application: **04.09.2024**
(21) Application number: 24158717.9
(22) Date of filing: 20.02.2024
(51) Int. Cl.: B23B 27/16

(54) **CUTTING INSERT, HOLDER, AND CUTTING TOOL**

(30) Priority: 01.03.2023 JP 2023031326
(71) Applicant: Tungaloy Corporation, Iwaki-shi, Fukushima 970-1144 (JP)
(72) Inventor: Miyazawa, Shunsuke, Iwaki-shi, Fukushima (JP); Saji, Ryuichi, Iwaki-shi, Fukushima (JP)
(74) Representative: Vossius & Partner Patentanwälte Rechtsanwälte mbB

(57) **Abstract**

A cutting insert, a holder, and a cutting tool with which the cutting insert can be easily and stably mounted on the holder and a fabrication target object can be excellently fabricated are provided. A cutting tool 100 that is used to fabricate a fabrication target object W by cutting includes a holder 50 and a cutting insert 10 that is mounted on a distal end of the holder 50. The holder 50 includes an insert pocket 53 into which the cutting insert 10 is fitted and a stopper portion 61 that elastically locks the cutting insert 10 to be fitted into the insert pocket 53. The cutting insert 10 includes a cutting portion 11 including a cutting edge 13, a fitting portion 12 that is fitted into the insert pocket 53, and a lock portion 21 that is formed at the fitting portion 12 and is to be locked to the stopper portion 61 of the holder 50.

## Description

### BACKGROUND OF THE INVENTION

### Field of the Invention

The present invention relates to a cutting insert, a holder, and a cutting tool.

### Description of the Related Art

Japanese Patent Laid-open No. 2006-315126 discloses an inner lathe turning tool in which a chip having a rhombus shape and including a cutting edge is fastened at a distal end of a holder in a bar shape by screwing.

Japanese Patent Laid-open No. 2020-163524 and Japanese Patent Laid-open No. 2020-157416 disclose a cutting tool in which a long attachment hole (insertion hole) is formed at a distal end of a holder and a cutting insert having a bar shape and including a cutting edge is inserted and fastened in the attachment hole by screwing.

Japanese Unexamined Patent Application Publication (Translation of PCT Application) No. 2016-511160 discloses a cutting tool in which an insert is pushed and assembled into an insert receiving slot of a holder blade, and Japanese Unexamined Patent Application Publication (Translation of PCT Application) No. 2012-522657 discloses a cutting tool in which a cutting insert is to be fitted into an insert pocket of an insert holder.

The cutting tool disclosed in Japanese Patent Laid-open No. 2006-315126 has a limitation in narrowing the holder because a thread for clamping the chip needs to be provided at the holder, and thus it has been difficult to reduce a minimum fabrication diameter. In such a chip-replacement-type inner cutting tool for small component fabrication, an extremely small screw is used for clamping, and thus fall and loss of a screw are likely to occur and attachment operability has a problem.

In a case of a tool including a cutting insert having a bar shape and including a cutting edge as disclosed in Japanese Patent Laid-open No. 2020-163524 and Japanese Patent Laid-open No. 2020-157416, as well, a small screw is used for positioning of the bar-shaped cutting insert. In particular, since the cutting insert has a narrow bar shape, it is difficult to handle the screw and the operability of attaching the cutting insert to a holder has a problem.

Japanese Unexamined Patent Application Publication (Translation of PCT Application) No. 2016-511160 and Japanese Unexamined Patent Application Publication (Translation of PCT Application) No. 2012-522657 are tools of a structure in which a cutting insert is mounted on a pocket of a holder without using a screw, but the strength of attaching the cutting insert to the holder is unstable and it is possible that the cutting insert is displaced at fabrication of a fabrication target object and favorable fabrication is difficult to be performed.

The present invention is made in view of the above-described problem and is intended to provide a cutting insert, a holder, and a cutting tool with which the cutting insert can be easily and stably mounted on the holder and a fabrication target object can be excellently fabricated.

### SUMMARY OF THE INVENTION

To achieve the above-described intention, a cutting insert of the present invention is a cutting insert to be mounted on a distal end of a holder, the cutting insert including:
a cutting portion including a cutting edge; and
a fitting portion that is to be fitted into an insert pocket formed in the holder.

The fitting portion includes a concave lock portion that is to be locked to part of the holder.

According to the cutting insert with such a configuration, since the concave lock portion of the fitting portion is locked to part of the holder, the cutting insert can be easily and stably mounted on the holder as compared to a structure in which the cutting insert is mounted on the holder by a screw. Accordingly, the operability of mounting the cutting insert on the holder can be improved and failure such as fall or loss of a screw can be avoided.

The cutting insert of the present invention has a contact surface that contacts an inner surface of the insert pocket and is restricted by the holder.

According to the cutting insert with such a configuration, the contact surface is held in contact with the inner surface of the insert pocket. Accordingly, force of holding the cutting insert to the holder is increased and displacement at fabrication of a fabrication target object can be prevented.

In the cutting insert of the present invention, the cutting portion includes
a side cutting edge provided on a lateral side, and
a front cutting edge provided on a front side, and an angle between the side cutting edge and the front cutting edge is equal to or larger than 25° and equal to or smaller than 80°.

According to the cutting insert with such a configuration, since the angle between the side cutting edge and the front cutting edge is equal to or larger than 25° and equal to or smaller than 80°, the cutting insert can be used as a replacement of a rhombus insert standardized by ISO, and the same cutting fabrication as that with such a rhombus insert can be performed.

To achieve the above-described intention, a holder of the present invention is a holder on a distal end of which a cutting insert is to be mounted, the holder comprising:
an insert pocket into which the cutting insert is to be fitted; and
a stopper portion that elastically locks the cutting insert to be fitted into the insert pocket.

According to the holder with such a configuration, since the cutting insert fitted into the insert pocket is elastically locked by the stopper portion and mounted, the cutting insert can be easily and stably mounted on the holder as compared to a structure in which the cutting insert is mounted on the holder by a screw. Accordingly, the operability of mounting the cutting insert on the holder can be improved and failure such as fall or loss of a screw can be avoided. Moreover, no thread is needed, and thus the diameter of the holder can be reduced and a small component can be fabricated.

In the holder of the present invention, a slit extending in a direction in which the cutting insert is to be fitted into the insert pocket is formed on the insert pocket side at the stopper portion.

According to the holder with such a configuration, since the slit extending in the direction in which the cutting insert is to be fitted into the insert pocket is formed on the insert pocket side at the stopper portion, the stopper portion can be excellently elastically deformed.

In the holder of the present invention, the stopper portion includes a convex portion that engages with a concave lock portion formed at the cutting insert to be fitted into the insert pocket.

According to the holder with such a configuration, as the cutting insert is to be fitted into the insert pocket, the convex portion of the stopper portion being elastically deformed engages with the concave lock portion of the cutting insert. Accordingly, the cutting insert can be pulled into the insert pocket. Moreover, the stopper portion being elastically deformed is restored when the convex portion of the stopper portion engages with the concave lock portion of the cutting insert, and thus completion of mounting of the cutting insert can be easily noticed with a feeling (what is called a click feeling) at restoration of the stopper portion.

In the holder of the present invention, the insert pocket has a restriction surface that contacts an outer surface of the cutting insert and holds the cutting insert.

According to the holder with such a configuration, the cutting insert fitted into the insert pocket can be held by the restriction surface. Accordingly, force of holding the cutting insert is increased, and displacement of the cutting insert at fabrication of a fabrication target object can be prevented.

In the holder of the present invention, a key hole communicating with a front side of the insert pocket in a direction in which the cutting insert is to be fitted is formed.

According to the holder with such a configuration, lock of the cutting insert by the stopper portion can be canceled by, for example, pushing a pin into the key hole to push, in a direction opposite the fitting direction, the cutting insert fitted into the insert pocket and mounted. Accordingly, the cutting insert can be easily removed from the holder as compared to a structure in which the cutting insert is mounted by a screw.

To achieve the above-described intention, a cutting tool of the present invention is a cutting tool that is used to fabricate a fabrication target object by cutting, the cutting tool including:
a holder; and
a cutting insert to be mounted on a distal end of the holder.

The holder includes
an insert pocket into which the cutting insert is to be fitted, and
a stopper portion that elastically locks the cutting insert to be fitted into the insert pocket.

The cutting insert includes
a cutting portion including a cutting edge,
a fitting portion that is to be fitted into the insert pocket, and
a lock portion that is formed at the fitting portion and is to be locked to the stopper portion of the holder.

According to the cutting tool with such a configuration, since the cutting insert fitted into the insert pocket is elastically locked by the stopper portion and mounted, the cutting insert can be easily and stably mounted on the holder as compared to a structure in which the cutting insert is mounted on the holder by a screw. Accordingly, the operability of mounting the cutting insert on the holder can be improved and failure such as fall or loss of a screw can be avoided. Moreover, no thread is needed, and thus the diameter of the holder can be reduced and a small component can be fabricated.

In the cutting tool of the present invention, a slit extending in a direction in which the cutting insert is to be fitted into the insert pocket is formed on the insert pocket side at the stopper portion.

According to the cutting tool with such a configuration, since the slit extending in the direction in which the cutting insert is to be fitted into the insert pocket is formed on the insert pocket side at the stopper portion, the stopper portion can be excellently elastically deformed.

In the cutting tool of the present invention, the stopper portion includes a convex portion that engages with the lock portion formed at the cutting insert to be fitted into the insert pocket.

According to the cutting tool with such a configuration, as the cutting insert is fitted into the insert pocket, the convex portion of the stopper portion being elastically deformed engages with the concave lock portion of the cutting insert. Accordingly, the cutting insert can be pulled into the insert pocket. Moreover, the stopper portion being elastically deformed is restored when the convex portion of the stopper portion engages with the concave lock portion of the cutting insert, and thus completion of mounting of the cutting insert can be easily noticed with a feeling (what is called a click feeling) at restoration of the stopper portion.

In the cutting tool of the present invention,
the insert pocket of the holder has a restriction surface, and
the cutting insert has a contact surface that contacts the restriction surface and is to be held by the holder when the fitting portion is fitted into the insert pocket.

According to the cutting tool with such a configuration, the cutting insert fitted into the insert pocket can be held by the restriction surface. Accordingly, force of holding the cutting insert is increased, and displacement of the cutting insert at fabrication of a fabrication target object can be prevented.

In the cutting tool of the present invention, the holder has a key hole communicating with a front side of the insert pocket in a direction in which the cutting insert is to be fitted.

According to the cutting tool with such a configuration, lock of the cutting insert by the stopper portion can be canceled by, for example, pushing a pin into the key hole to push, in a direction opposite the fitting direction, the cutting insert fitted into the insert pocket and mounted. Accordingly, the cutting insert can be easily removed from the holder as compared to a structure in which the cutting insert is mounted by a screw.

In the cutting tool of the present invention,
the cutting portion includes
a side cutting edge provided on a lateral side, and
a front cutting edge provided on a front side.

An angle between the side cutting edge and the front cutting edge is equal to or larger than 25° and equal to or smaller than 80°.

According to the cutting tool with such a configuration, since the angle between the side cutting edge and the front cutting edge of the cutting insert is equal to or larger than 25° and equal to or smaller than 80°, the cutting tool can be used as a replacement of a rhombus insert standardized by ISO, and the same cutting fabrication as that with a cutting tool on which such as a rhombus insert is mounted can be performed.

In the cutting tool of the present invention, a cutting edge angle of the front cutting edge on the fabrication target object at cutting is equal to or larger than 60° and equal to or smaller than 145°.

According to the cutting tool with such a configuration, since the cutting edge angle of the front cutting edge on a fabrication target object at cutting is equal to or larger than 60° and equal to or smaller than 145°, the cutting tool can be used as a replacement of a rhombus insert standardized by ISO, and the same cutting fabrication as that with a cutting tool on which such a rhombus insert is mounted can be performed.

According to the present invention, it is possible to provide a cutting insert, a holder, and a cutting tool with which the cutting insert can be easily and stably mounted on the holder and a fabrication target object can be excellently fabricated.

### BRIEF DESCRIPTION OF THE DRAWINGS

FIG. 1 is a perspective view of a cutting tool according to the present embodiment;
FIG. 2 is an exploded perspective view of the cutting tool according to the present embodiment;
FIG. 3 is a plan view of the distal end of the cutting tool;
FIG. 4 is a cross-sectional view of a cutting insert in an axial direction of a holder from a side;
FIG. 5 is a perspective view of the cutting insert;
FIG. 6 is a perspective view of the cutting insert from below;
FIG. 7 is a plan view of the cutting insert;
FIG. 8 is a side view of the cutting insert;
FIG. 9 is a front view of the cutting insert;
FIG. 10 is a back view of the cutting insert;
FIG. 11 is a perspective view of the holder;
FIG. 12 is a perspective view of an insert attachment portion of the holder;
FIG. 13 is a perspective view of the insert attachment portion of the holder from below;
FIG. 14 is a perspective view of a stopper portion provided at the insert attachment portion from below;
FIG. 15 is a plan view of the insert attachment portion of the holder; and
FIG. 16 is a cross-sectional view along A-A in FIG. 15.

### DETAILED DESCRIPTION OF THE PREFERRED EMBODIMENTS

An embodiment of the present invention will be described below in detail with reference to the accompanying drawings.

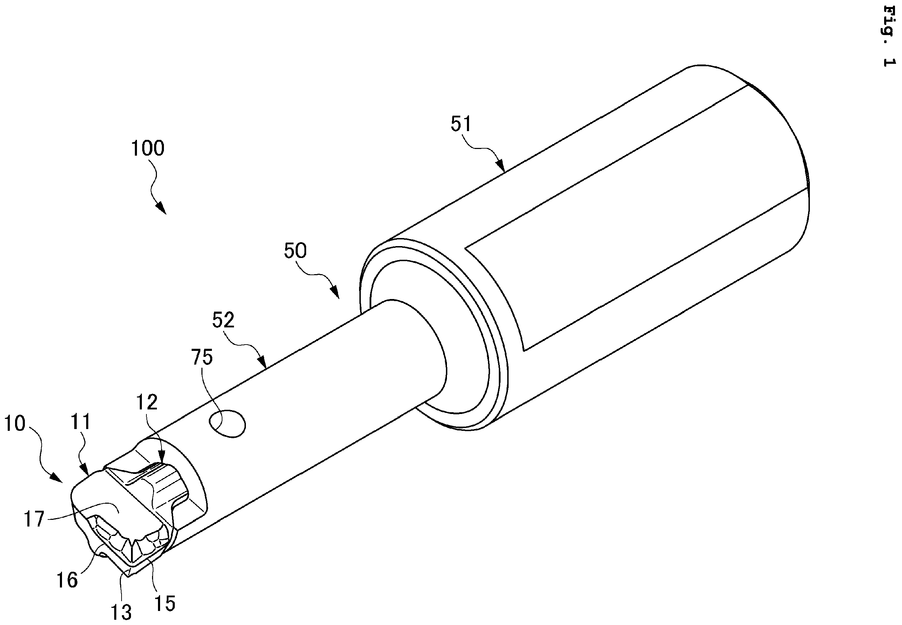

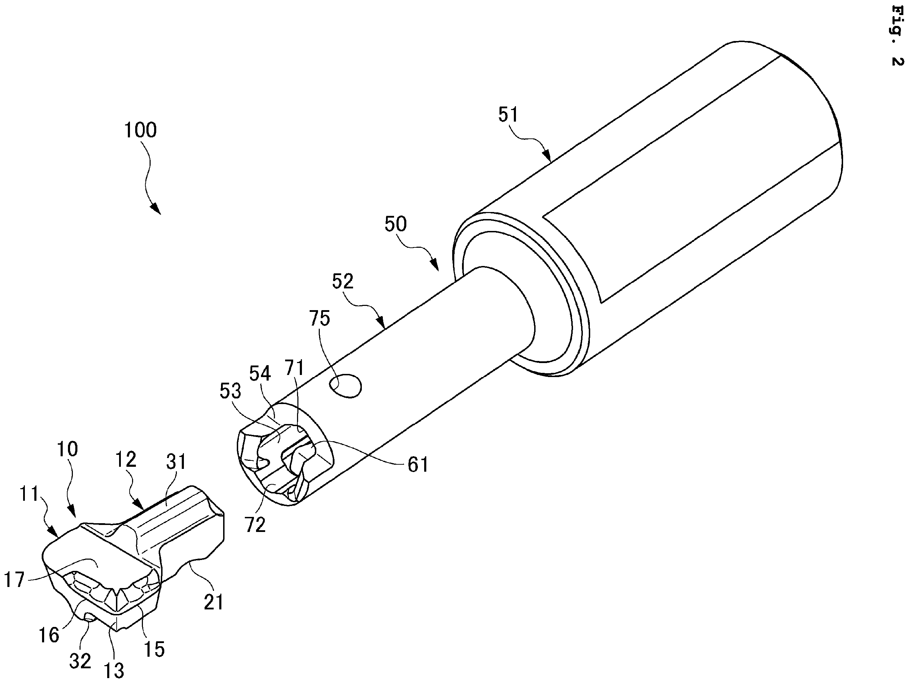

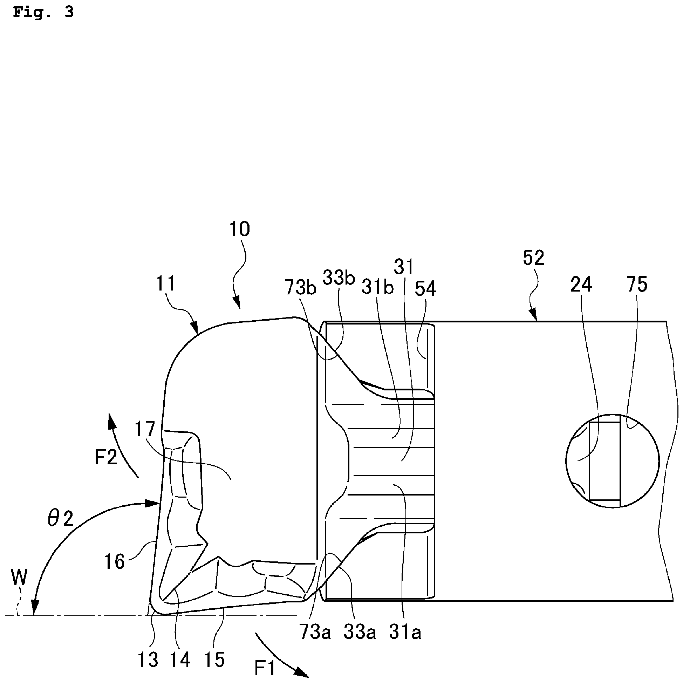

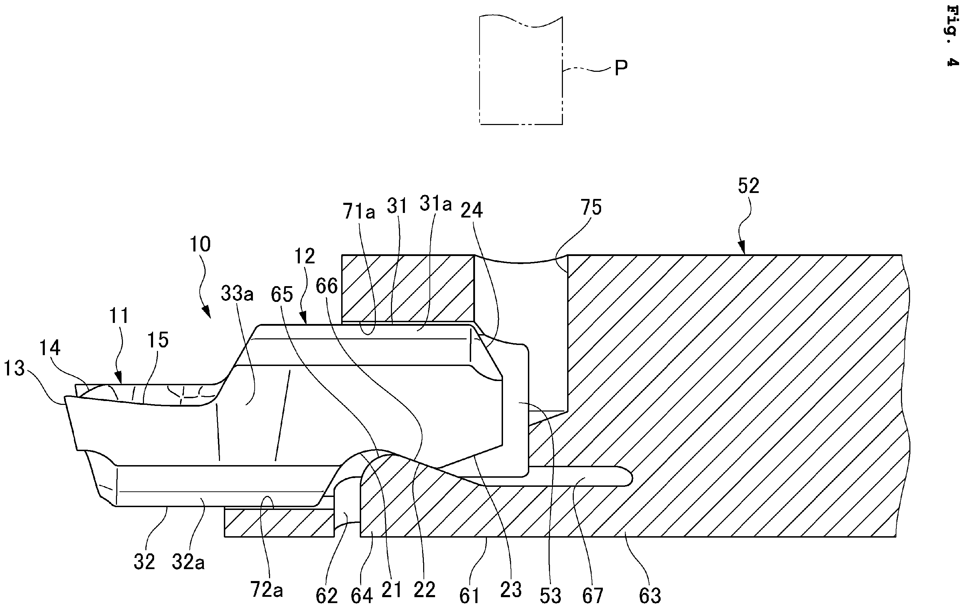

FIG. 1 is a perspective view of a cutting tool according to the present embodiment. FIG. 2 is an exploded perspective view of the cutting tool according to the present embodiment. FIG. 3 is a plan view of the distal end of a cutting tool. FIG. 4 is a cross-sectional view of a cutting insert in an axial direction of the holder from a side.

As illustrated in FIGS. 1 to 4, a cutting tool 100 according to the present embodiment includes a cutting insert 10 and a holder 50. The cutting tool 100 is an inner cutting lathe turning tool in which the cutting insert 10 is mounted on the distal end of the holder 50 and that cuts an inner part of a rotating fabrication target object by using the cutting insert 10 at the distal end of the holder 50.

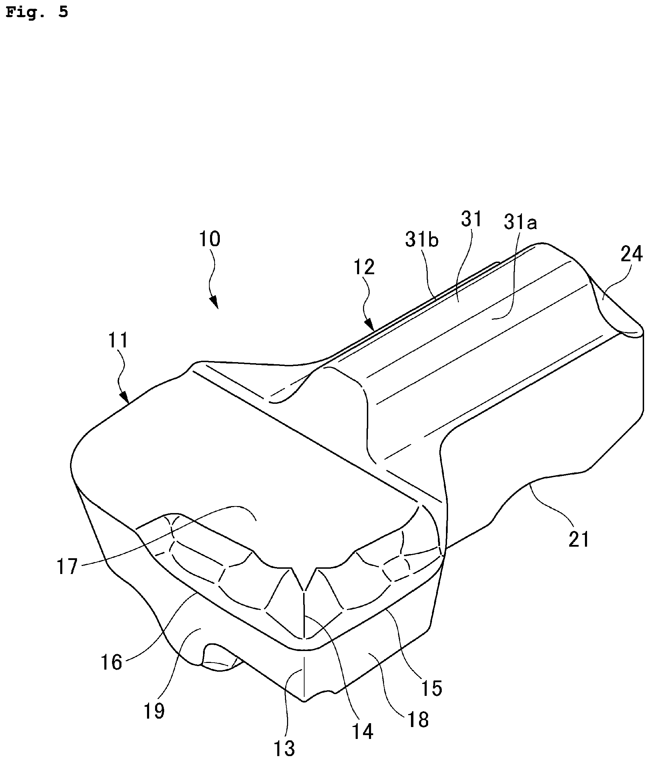

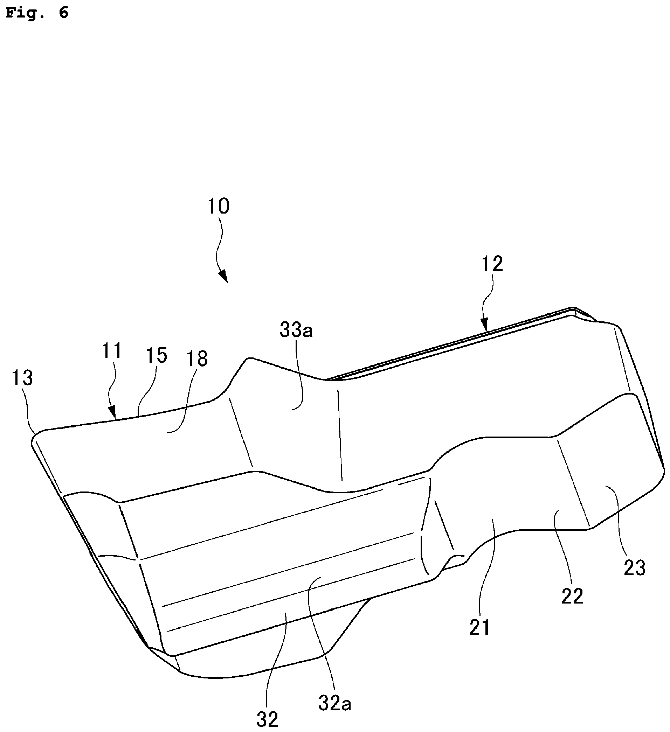

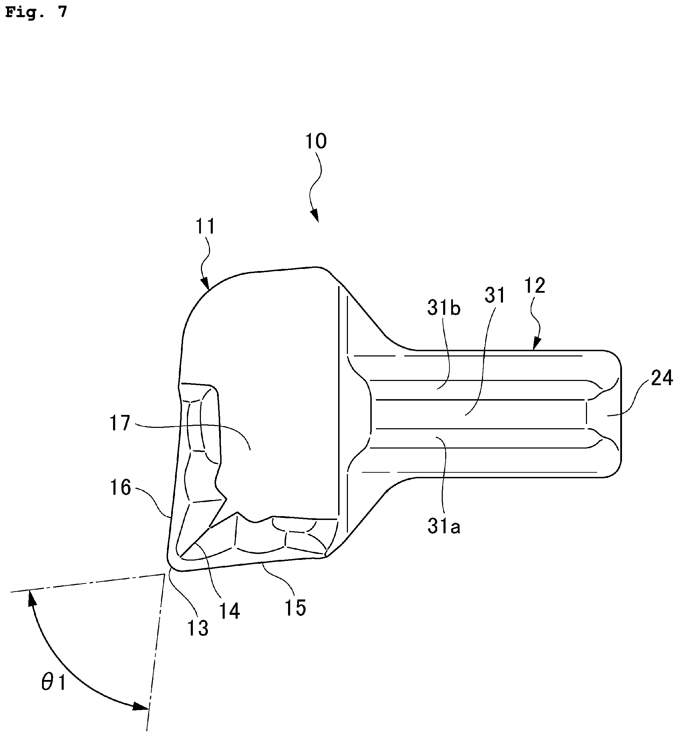

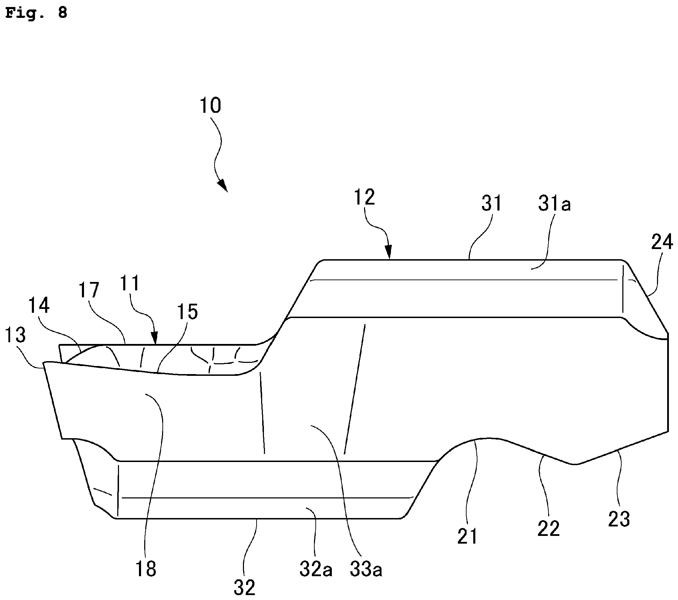

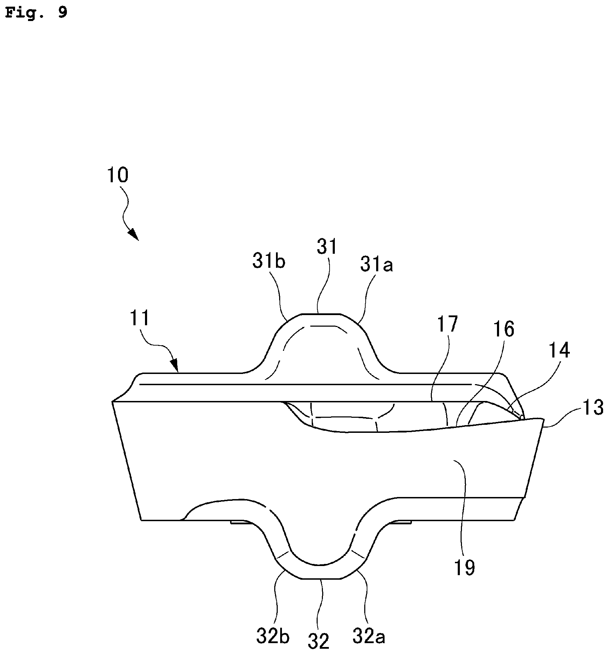

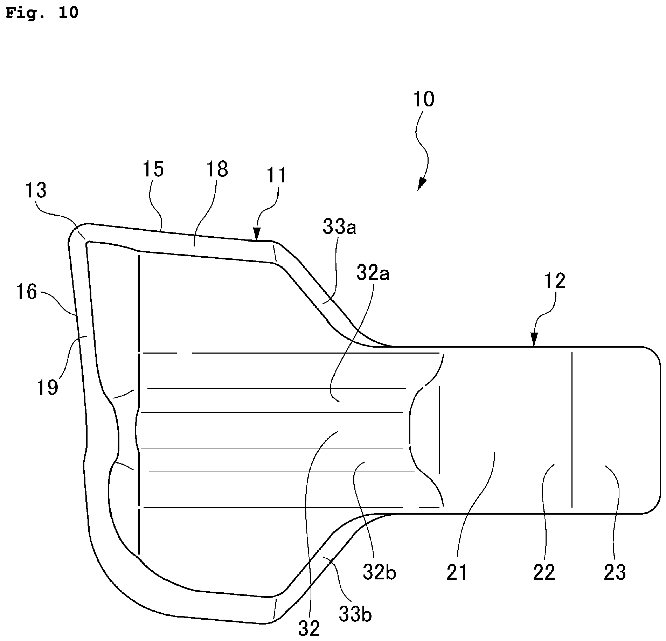

FIG. 5 is a perspective view of the cutting insert. FIG. 6 is a perspective view of the cutting insert from below. FIG. 7 is a plan view of the cutting insert. FIG. 8 is a side view of the cutting insert. FIG. 9 is a front view of the cutting insert. FIG. 10 is a back view of the cutting insert.

As illustrated in FIGS. 5 to 10, the cutting insert 10 includes a cutting portion 11 and a fitting portion 12. The fitting portion 12 is integrally shaped at a back part of the cutting portion 11 and extended from the cutting portion 11 toward the back side. The cutting portion 11 is flared from both side parts of the fitting portion 12.

The cutting insert 10 is formed of various kinds of materials such as cemented carbide alloy, cermet, ceramic, a super high pressure sintered body, and diamond.

A front part of the cutting portion 11 includes a cutting edge 13 at one side corner on the upper side. The cutting portion 11 also includes a breaker 14 on the upper side of the cutting edge 13. The cutting edge 13 includes a side cutting edge 15 and a front cutting edge 16. The upper surface of the cutting portion 11 is a rake surface 17, one side surface thereof is a side flank surface 18, and the front surface thereof is a front flank surface 19. The side cutting edge 15 is formed between the rake surface 17 and the side flank surface 18, and the front cutting edge 16 is formed between the rake surface 17 and the front flank surface 19.

In this manner, the cutting portion 11 includes the side cutting edge 15 provided on a lateral side and the front cutting edge 16 provided on a front side, and an angle θ1 between the side cutting edge 15 and the front cutting edge 16 is equal to or larger than 25° and equal to or smaller than 80° (refer to FIG. 7).

A lock portion 21 is provided on the lower side of the fitting portion 12. The lock portion 21 is formed in a concave shape in a side view. The lock portion 21 has a lock target surface 22 as a tilt surface on the back side at the inner surface. The fitting portion 12 also has, on the back side of the lock portion 21 on the lower side, a slide surface 23 that gradually tilted upward toward a rear end. The fitting portion 12 also has a tapering surface 24 at an upper part at the rear end. The tapering surface 24 is gradually tilted upward from the rear end of the fitting portion 12 toward the front side.

The cutting insert 10 includes an upper protrusion portion 31 and a lower protrusion portion 32 extending in the front-back direction at upper and lower parts. The upper protrusion portion 31 is formed at the fitting portion 12 of the cutting insert 10, and the lower protrusion portion 32 is formed at a part from the cutting portion 11 to the fitting portion 12 of the cutting insert 10.

Upper contact surfaces (contact surfaces) 31a and 31b are formed in the extension direction at respective corners of the upper protrusion portion 31 in a cross-section view. Similarly, lower contact surfaces (contact surfaces) 32a and 32b are formed in the extension direction at respective corners of the lower protrusion portion 32 in a cross-section view.

In the cutting insert 10, back surfaces of the cutting portion 11 on the fitting portion 12 side are side contact surfaces (contact surfaces) 33a and 33b, respectively.

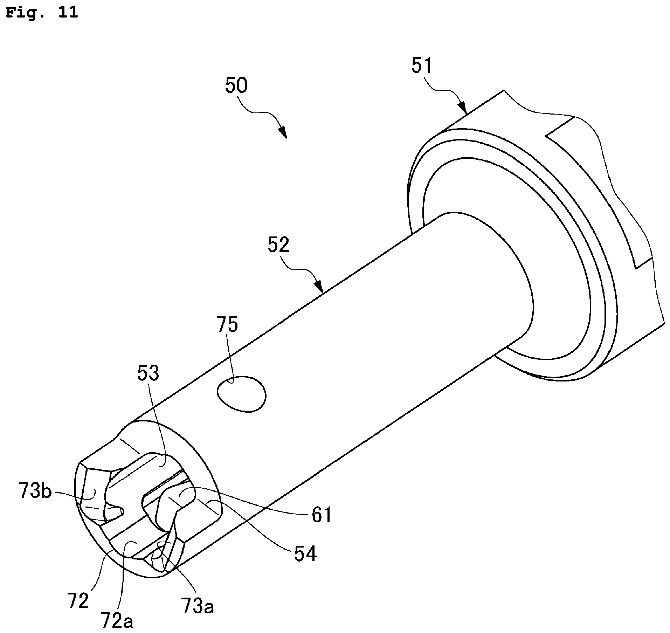

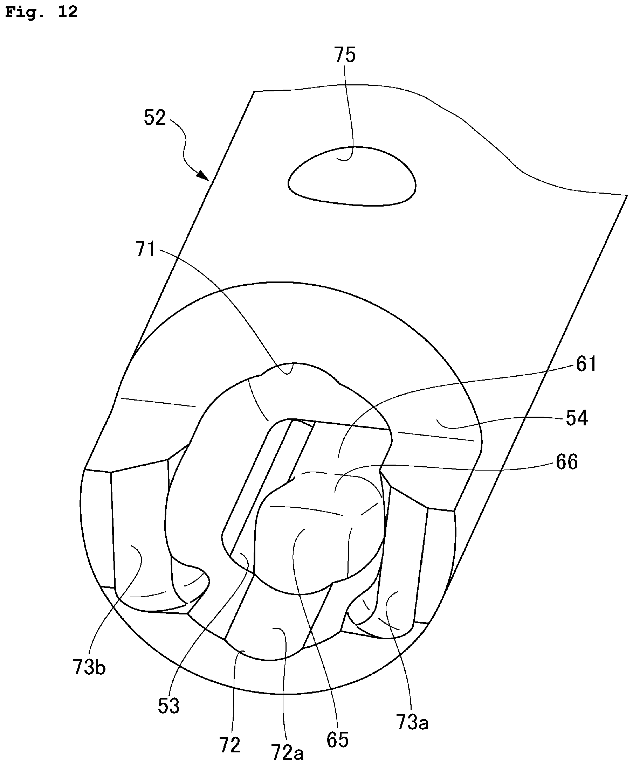

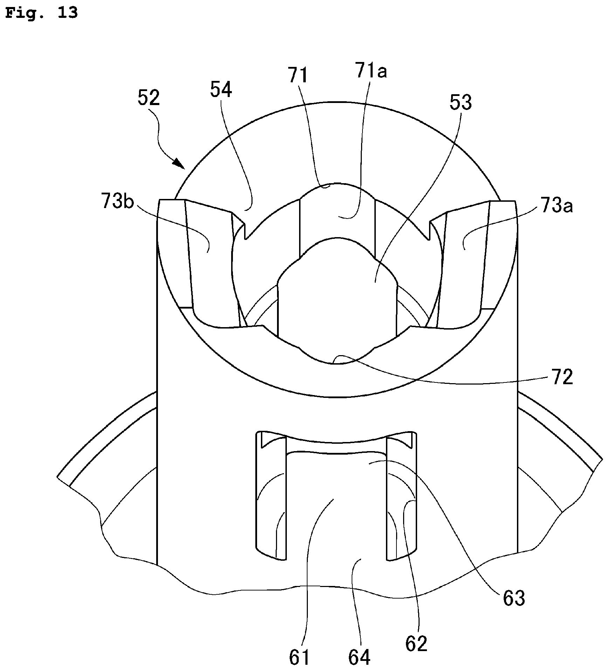

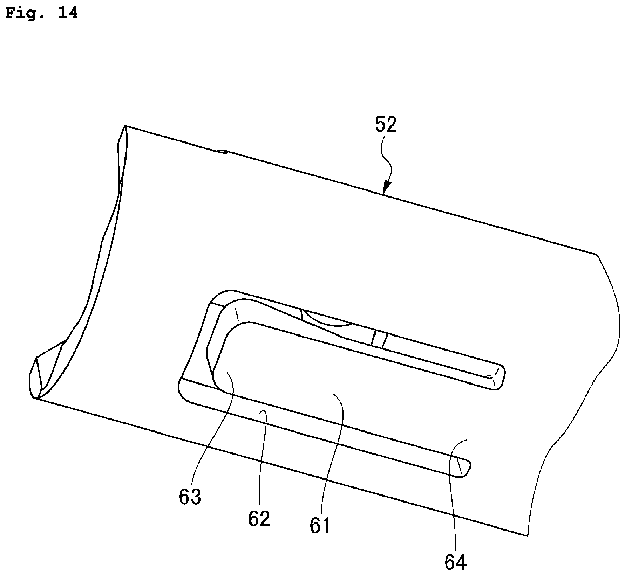

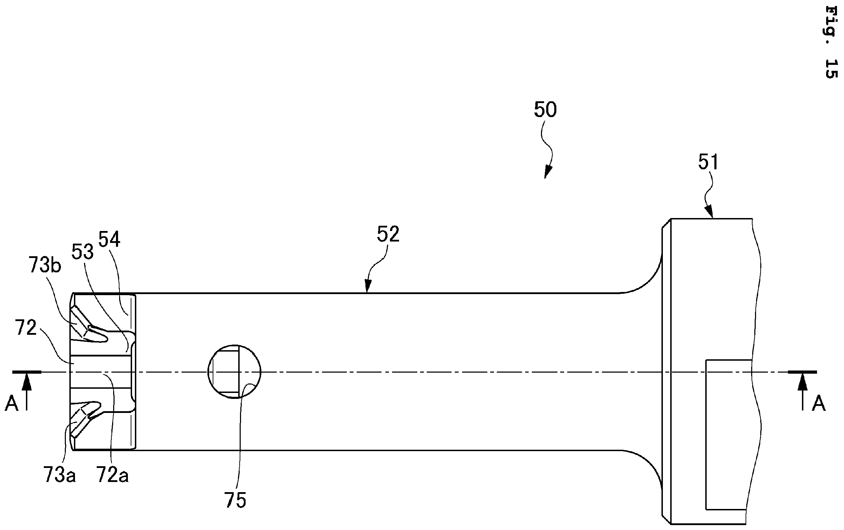

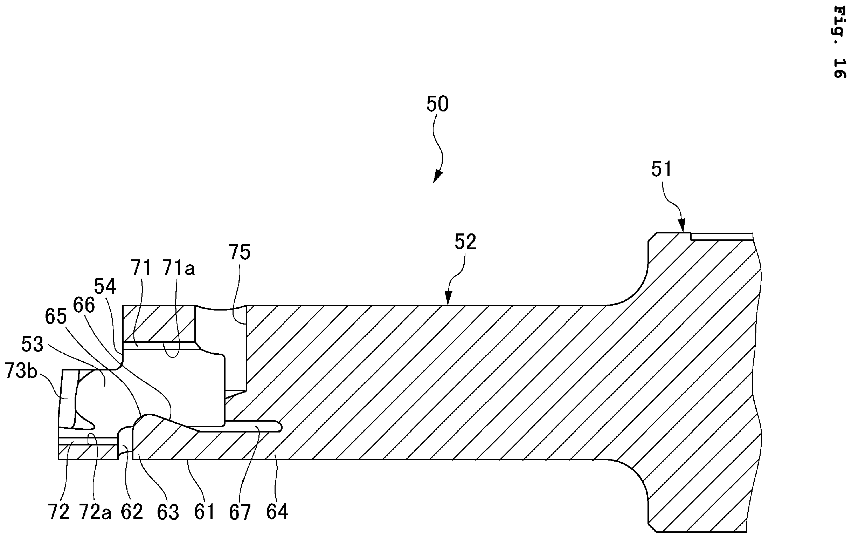

FIG. 11 is a perspective view of the holder. FIG. 12 is a perspective view of an insert attachment portion of the holder. FIG. 13 is a perspective view of the insert attachment portion of the holder from below. FIG. 14 is a perspective view of a stopper portion provided at the insert attachment portion from below. FIG. 15 is a plan view of the insert attachment portion of the holder. FIG. 16 is a cross-sectional view along A-A in FIG. 15.

As illustrated in FIGS. 11 to 16, the holder 50 is formed in a cylindrical shape, and the cutting insert 10 is to be mounted on the distal end thereof. The holder 50 includes a shank portion 51 and an insert attachment portion 52. The insert attachment portion 52 is formed with a diameter smaller than the diameter of the shank portion 51.

The holder 50 is formed of a metallic material such as a steel material. The material of the holder 50 is preferably, for example, an alloy tool steel material (SKS5), dies steel (SKD61), or maraging steel, which are elastic and unlikely to plastically deform.

The holder 50 is shaped by, for example, a metal powder sintered 3D printer that three-dimensionally shapes a shaped object by using metal powder. Examples of shaping methods using the metal powder sintered 3D printer include powder bed fusion, electron beam melting (EBM) of melting powder by using an electron beam, and selective laser melting (SLM) of melting powder by using a laser beam.

An insert pocket 53 is provided at the distal end of the insert attachment portion 52 of the holder 50.

The insert pocket 53 is made of a hole formed at an end face of the insert attachment portion 52, and the cutting insert 10 is fitted into the insert pocket 53 from the fitting portion 12 side. In addition, a cutout portion 54 is formed at an upper part at an end part of the insert attachment portion 52 such that part of the insert pocket 53 is exposed.

A stopper portion 61 is provided at a lower part of the insert attachment portion 52. An opening part 62 is provided at the lower part of the insert attachment portion 52, and the stopper portion 61 is disposed at the opening part 62.

The stopper portion 61 extends in the longitudinal direction of the insert pocket 53. The stopper portion 61 is formed in a one-side support beam shape with a free end 63 on the distal end side and a proximal end 64 provided continuously with the holder 50 on the rear end side. A convex portion 65 protruding toward the insert pocket 53 side is provided at the free end 63 of the stopper portion 61. The convex portion 65 is engageable with the lock portion 21 formed at the fitting portion 12 of the cutting insert 10 fitted into the insert pocket 53. A tilt surface on the back side at the outer surface of the convex portion 65 is a locking surface 66.

In the insert attachment portion 52, a slit 67 extending in a direction in which the fitting portion 12 of the cutting insert 10 is to be fitted into the insert pocket 53 is formed on the insert pocket 53 side at the stopper portion 61. Accordingly, the stopper portion 61 can be easily elastically deformed.

The insert attachment portion 52 includes an upper concave portion 71 and a lower concave portion 72. The upper concave portion 71 is formed at an upper part of the inner surface of the insert pocket 53, and the lower concave portion 72 is formed at a lower part of the inner surface of the insert pocket 53. The upper concave portion 71 and the lower concave portion 72 are each formed in a circular arc shape in a cross-section view, and the inner surfaces thereof are an upper restriction surface (restriction surface) 71a and a lower restriction surface (restriction surface) 72a. The upper protrusion portion 31 and the lower protrusion portion 32 of the cutting insert 10 to be mounted on the insert attachment portion 52 enter the upper concave portion 71 and the lower concave portion 72. Accordingly, the upper restriction surface 71a of the upper concave portion 71 and the lower restriction surface 72a of the lower concave portion 72 contact the upper contact surface 31a and 31b and the lower contact surface 32a and 32b formed at the upper protrusion portion 31 and the lower protrusion portion 32 of the cutting insert 10.

Further, the insert attachment portion 52 has side restriction surfaces (restriction surfaces) 73a and 73b on respective sides at an end face. The side restriction surfaces 73a and 73b contact the side contact surface 33a and 33b of the cutting insert 10 to be mounted on the insert attachment portion 52.

A key hole 75 is provided at the insert attachment portion 52. The key hole 75 is formed at an upper part of the insert attachment portion 52 and communicates with the front side of the insert pocket 53 in the fitting direction of the cutting insert 10.

Mounting of the cutting insert 10 on the holder 50 will be described below.

When the cutting insert 10 is to be mounted on the holder 50, the cutting insert 10 is moved closer to the insert attachment portion 52 of the holder 50 from the distal end side. In this case, the fitting portion 12 of the cutting insert 10 is placed toward the holder 50, and the upper and lower positions of the cutting insert 10 are aligned with the holder 50 (refer to FIG. 2).

Then, the fitting portion 12 of the cutting insert 10 is inserted into the insert pocket 53 formed at the insert attachment portion 52 of the holder 50. In this manner, the upper protrusion portion 31 and the lower protrusion portion 32 of the cutting insert 10 engage with the upper concave portion 71 and the lower concave portion 72 formed at the insert attachment portion 52 of the holder 50.

In this state, the cutting insert 10 is pushed toward the holder 50 by a finger. Accordingly, the cutting insert 10 is moved deeper in the insert pocket 53 as the upper protrusion portion 31 and the lower protrusion portion 32 are guided by the upper concave portion 71 and the lower concave portion 72.

As the cutting insert 10 is pushed into the insert pocket 53, the slide surface 23 of the cutting insert 10 and the convex portion 65 of the stopper portion 61 of the holder 50 contact each other and relatively slide. In this state, as the cutting insert 10 is further pushed, the stopper portion 61 is pushed outward (downward on the sheet of FIG. 4) by the fitting portion 12 of the cutting insert 10 and elastically deformed.

Thereafter, the convex portion 65 enters the lock portion 21 of the cutting insert 10, and the locking surface 66 of the convex portion 65 contacts the lock target surface 22 of the lock portion 21. Then, as the stopper portion 61 being elastically deformed is restored, the locking surface 66 of the convex portion 65 slides on the lock target surface 22 of the lock portion 21, elastic force of the stopper portion 61 being restored is transferred to the cutting insert 10 through the lock target surface 22 of the lock portion 21 and the locking surface 66 of the convex portion 65 relatively sliding, and accordingly, the cutting insert 10 is pulled deeper in the insert pocket 53 and mounted.

With this clamp mechanism of a structure in which the convex portion 65 of the stopper portion 61 being elastically deformed engages with the concave lock portion 21 of the cutting insert 10 as the fitting portion 12 of the cutting insert 10 is fitted into the insert pocket 53, the cutting insert 10 can be easily pulled into the insert pocket 53.

Moreover, since the stopper portion 61 being elastically deformed is restored when the convex portion 65 of the stopper portion 61 engages with the concave lock portion 21 of the cutting insert 10, completion of mounting of the cutting insert 10 can be easily noticed with a feeling (what is called a click feeling) at restoration of the stopper portion 61.

In the cutting tool 100 when the cutting insert 10 is mounted on the holder 50, the lock target surface 22 of the lock portion 21 of the cutting insert 10 mounted on the holder 50 is locked by the locking surface 66 of the convex portion 65 of the stopper portion 61 of the holder 50 and the mounting state of the cutting insert 10 on the holder 50 is maintained (refer to FIG. 4).

In the mounting state, the upper contact surface 31a and 31b and the lower contact surface 32a and 32b of the cutting insert 10 contact the upper restriction surface 71a and the lower restriction surface 72a of the holder 50, and in addition, the side contact surface 33a and 33b of the cutting insert 10 contact the side restriction surfaces 73a and 73b of the holder 50. Accordingly, the cutting insert 10 fitted into the insert pocket 53 of the holder 50 and mounted is held by the holder 50 without backlash by high holding force.

When a fabrication target object W is cut with the cutting tool 100 in which the cutting insert 10 is mounted on the holder 50, a cutting edge angle θ2 of the front cutting edge 16 on the fabrication target object W is equal to or larger than 60° and equal to or smaller than 145° (refer to FIG. 3). Thus, with the cutting edge 13 in which the angle θ1 between the side cutting edge 15 and the front cutting edge 16 is equal to or larger than 25° and equal to or smaller than 80° and the cutting edge angle θ2 of the front cutting edge 16 is equal to or larger than 60° and equal to or smaller than 145°, the cutting tool 100 can perform, on the fabrication target object W, the same cutting fabrication as that with a cutting tool on which a rhombus insert standardized by ISO is mounted.

When cutting the fabrication target object W, the cutting insert 10 receives, from the fabrication target object W, reaction force of rotation about an axis in a plane orthogonal to the axial direction. Specifically, reaction force F1 is received due to cutting resistance on the front cutting edge 16 from the fabrication target object W, and reaction force F2 is received due to cutting resistance on the side cutting edge 15 from the fabrication target object W (refer to FIG. 3).

In the cutting tool 100, when the cutting insert 10 receives the reaction forces F1 and F2, the side restriction surface 73a of the holder 50 contacting the side contact surface 33a of the cutting insert 10 receives the reaction force F1 and the side restriction surface 73b of the holder 50 contacting the side contact surface 33b of the cutting insert 10 receives the reaction force F2. Thus, displacement of the cutting insert 10 at fabrication of the fabrication target object W can be prevented and cutting fabrication can be excellently performed.

Removal of the cutting insert 10 from the holder 50 will be described below.

When the cutting insert 10 is to be removal from the holder 50, a pin P is pushed into the key hole 75 formed at the holder 50 (refer to FIG. 4). Accordingly, the tapering surface 24 formed at the fitting portion 12 of the cutting insert 10 is pushed by the distal end of the pin P. As a result, the stopper portion 61 is pushed outward (downward on the sheet of FIG. 4) and elastically deformed and the cutting insert 10 fitted into the insert pocket 53 and mounted is pushed in a direction opposite the fitting direction, and lock of the cutting insert 10 by the stopper portion 61 is canceled. Thus, the cutting insert 10 can be easily removed from the insert pocket 53 of the holder 50 as compared to a structure in which the cutting insert 10 is mounted by a screw.

The key hole 75 into which the pin P is pushed may be a long hole extending in the direction in which the cutting insert 10 is to be fitted into the insert pocket 53. In this case, as the rear end of the pin P inserted into the key hole 75 as a long hole is inclined toward the back side of the holder 50, the pin P is swung with a pivot point at a place of contact with the key hole 75, and the cutting insert 10 is pushed by the distal end of the pin P and thus can be easily removed from the insert pocket 53.

As described above, according to the present embodiment, with the clamp mechanism of a structure in which the cutting insert 10 fitted into the insert pocket 53 is elastically locked by the stopper portion 61 and mounted, the cutting insert 10 can be easily and stably mounted on the holder 50 as compared to a structure in which the cutting insert is mounted on the holder by a screw. Accordingly, the operability of mounting the cutting insert 10 on the holder 50 can be improved and failure such as fall or loss of a screw can be avoided. Moreover, no thread is needed, and thus the diameter of the holder 50 can be reduced and a small component can be fabricated.

The present invention is not limited to an inner cutting lathe turning tool but is also applicable to an outer cutting lathe turning tool that cuts an outer part of a rotating fabrication target object by using a cutting insert mounted on the distal end of a rectangular holder. The present invention is also applicable to a case where the cutting edges of the cutting insert are replaced with those of an inner grooving edge type or an end face grooving edge type and inner grooving fabrication and end face grooving fabrication are performed.

### Reference Signs List

10 cutting insert
11 cutting portion
12 fitting portion
13 cutting edge
15 side cutting edge
16 front cutting edge
21 lock portion
31a, 31b upper contact surface (contact surface)
32a, 32b lower contact surface (contact surface)
33a, 33b side contact surface (contact surface)
50 holder
53 insert pocket
61 stopper portion
65 convex portion
67 slit
71a upper restriction surface (restriction surface)
72a lower restriction surface (restriction surface)
73a, 73b side restriction surface (restriction surface)
75 key hole
100 cutting tool
W fabrication target object
θ1 angle
θ2 cutting edge angle

## Claims

1. A cutting insert to be mounted on a distal end of a holder, the cutting insert comprising:
a cutting portion including a cutting edge; and
a fitting portion that is to be fitted into an insert pocket formed in the holder,
wherein the fitting portion includes a concave lock portion that is to be locked to part of the holder.

2. The cutting insert according to claim 1, which has a contact surface that contacts an inner surface of the insert pocket and is restricted by the holder.

3. The cutting insert according to claim 1 or 2, wherein
the cutting portion includes
a side cutting edge provided on a lateral side, and
a front cutting edge provided on a front side, and
an angle between the side cutting edge and the front cutting edge is equal to or larger than 25° and equal to or smaller than 80°.

4. A holder on a distal end of which a cutting insert is to be mounted, the holder comprising:
an insert pocket into which the cutting insert is to be fitted; and
a stopper portion that elastically locks the cutting insert to be fitted into the insert pocket.

5. The holder according to claim 4, wherein a slit extending in a direction in which the cutting insert is to be fitted into the insert pocket is formed on the insert pocket side at the stopper portion.

6. The holder according to claim 4 or 5, wherein the stopper portion includes a convex portion that engages with a concave lock portion formed at the cutting insert to be fitted into the insert pocket.

7. The holder according to claim 4, 5, or 6, wherein the insert pocket has a restriction surface that contacts an outer surface of the cutting insert and holds the cutting insert.

8. The holder according to any one of claims 4 to 7, through which a key hole communicating with a front side of the insert pocket in a direction in which the cutting insert is to be fitted is formed.

9. A cutting tool that is used to fabricate a fabrication target object by cutting, the cutting tool comprising:
a holder; and
a cutting insert that is to be mounted on a distal end of the holder, wherein
the holder includes
an insert pocket into which the cutting insert is to be fitted, and
a stopper portion that elastically locks the cutting insert to be fitted into the insert pocket, and
the cutting insert includes
a cutting portion including a cutting edge,
a fitting portion that is to be fitted into the insert pocket, and
a lock portion that is formed at the fitting portion and is to be locked to the stopper portion of the holder.

10. The cutting tool according to claim 9, wherein a slit extending in a direction in which the cutting insert is to be fitted into the insert pocket is formed on the insert pocket side at the stopper portion.

11. The cutting tool according to claim 9 or 10, wherein the stopper portion includes a convex portion that engages with the lock portion formed at the cutting insert to be fitted into the insert pocket, the lock portion having a concave shape.

12. The cutting tool according to claim 9, 10, or 11, wherein
the insert pocket of the holder has a restriction surface, and
the cutting insert has a contact surface that contacts the restriction surface and is to be held by the holder when the fitting portion is fitted into the insert pocket.

13. The cutting tool according to any one of claims 9 to 12, wherein the holder has a key hole communicating with a front side of the insert pocket in a direction in which the cutting insert is to be fitted.

14. The cutting tool according to any one of claims 9 to 13, wherein
the cutting portion includes
a side cutting edge provided on a lateral side, and
a front cutting edge provided on a front side, and
an angle between the side cutting edge and the front cutting edge is equal to or larger than 25° and equal to or smaller than 80°.

15. The cutting tool according to claim 14, wherein a cutting edge angle of the front cutting edge on the fabrication target object at cutting is equal to or larger than 60° and equal to or smaller than 145°.
